Europäisches Patentamt

European Patent Office

Office européen des brevets

(19)

(11) Veröffentlichungsnummer: **0 015 398**
**B1**

(12) **EUROPÄISCHE PATENTSCHRIFT**

(45) Veröffentlichungstag der Patentschrift:
02.09.81

(51) Int. Cl.³: **G 11 B 23/02**

(21) Anmeldenummer: 80100617.2

(22) Anmeldetag: 07.02.80

(54) **Magazin für Magnetbandkassetten.**

(30) Priorität: 09.02.79 DE 7903580 U

(43) Veröffentlichungstag der Anmeldung:
17.09.80 Patentblatt 80/19

(45) Bekanntmachung des Hinweises auf die Patenterteilung:
02.09.81 Patentblatt 81/35

(84) Benannte Vertragsstaaten:
DE FR IT NL

(56) Entgegenhaltungen:
DE-U-7 310 057
US-A-3 756 383
US-A-3 907 116

(73) Patentinhaber: BASF Aktiengesellschaft,
Carl-Bosch-Strasse 38, D-6700 Ludwigshafen (DE)

(72) Erfinder: Gaiser, Dieter, Ulmenweg 8,
D-7597 Rheinau-Diersheim (DE)
Erfinder: Schmidts, Kurt, Kornstrasse 10,
D-7640 Kehl 16 (DE)
Erfinder: Scherer, Volker, Vogesenstrasse 3,
D-7601 Willstaett (DE)
Erfinder: Koob, Hubert, Muensterstrasse 4,
D-7601 Willstaett (DE)

BUNDESDRUCKEREI BERLIN

## Magazin für Magnetbandkassetten

Die Erfindung betrifft ein Magazin für Magnetbandkassetten, bestehend aus einer im Querschnittprofil U-förmigen Wanne mit einer Vielzahl von am Wannenboden quer verlaufenden Stegen, die im Abstand der Dicke einer Magnetbandkassette angeordnet sind.

Nach der deutschen Gebrauchsmusteranmeldung G 73 01 641 ist ein als Verpackungsbox für Tonbandkassetten bezeichnetes Magazin bekannt, das aus einem oben durch einen Klarsichtdeckel abdeckbaren, sonst allseitig abgeschlossenen Behälter besteht. Der Behälterboden ist mit Stegen ausgestattet, zwischen denen jeweils eine Kassette einzusetzen ist.

Als Transportmittel für Magnetbandkassetten bzw. Kassettengehäuseteile zwischen Montagestationen in der Produktion von Magnetbandkassetten ist dieser Behälter wenig geeignet. Die Kassetten müssen von Hand oder komplizierten Greifmechanismen einzeln eingesetzt, durch Arretierungsorgane für den Transport und das Instellungbringen in jeder beliebigen Lage gesichert und wieder einzeln entnommen werden. Dabei können die Kassetten während des Transports durch Reiben gegeneinander sowie am Behälter und den Stegen Kratz- und Scheuerspuren erhalten, die durch einen zusätzlichen Arbeitsgang wieder beseitigt werden müssen. Ferner ist ein Stapeln bestückter Behälter ohne Klarsichtdeckel nicht möglich, da die eingesetzten Kassetten die Behälterwände überragen.

Es stellte sich daher die Aufgabe, ein sowohl für Magnetbandkassetten als auch für Kassettengehäusehälften verwendbares Magazin zu entwickeln, durch das die vorstehend aufgezeigten Nachteile überwunden sind. Insbesondere soll das Magazin in seiner Handhabung möglichst dem mechanisierten Montageablauf der Kassettenproduktion angepaßt sein.

Die Aufgabe wurde durch ein Magazin gelöst, das dadurch gekennzeichnet ist, daß die Wanne an den beiden Stirnseiten offen ist und die beiden Seitenteile der Wanne, die die eingesetzten Magnetbandkassetten überragen und elastisch nach außen biegbar sind, an der Innenseite über die gesamte Länge mit jeweils einem Streifen aus nachgiebigem Material versehen sind, wobei die lichte Weite zwischen den derartig belegten Seitenteilen etwa im Maße der Kompressibilität der Streifen kleiner ist als das diesbezügliche Maß der einzusetzenden Magnetbandkassetten.

In einer vorteilhaften Ausführungsform des Magazins sind die Stege zum Wannenraum hin konisch verjüngt.

In weiterer Ausgestaltung des erfindungsgemäßen Magazins ist der Wannenboden zwischen den Stegen jeweils an mindestens einer Stelle durchbohrt.

In Weiterbildung der Erfindung ist die Wanne an ihrer Unterseite mit zur Ausdehnung und Anordnung der Oberkante der beiden Seitenteile deckungsgleichen Nuten versehen. Ferner weisen die Seitenteile in einer bevorzugten Ausführungsform der Wanne an ihren Stirnkanten einerseits jeweils eine entlang der Kante verlaufende Nut und andererseits jeweils einen dazu deckungsgleichen Steg auf.

Mit geringem Aufwand ist erreicht, daß die auf der Montagestraße aneinandergereiht angelieferten Magnetbandkassetten bzw. Kassettengehäuseteile mit einem Handgriff durch Überstülpen des Magazins über die Kassettenanordnung in ihrer Gesamtheit in dieses überführt werden können, darin ohne zusätzlichen Mechanismus und ohne zusätzliche Betätigung in jeder Lage des Magazins festgehalten und dabei gegen Beschädigungen geschützt sind. Das Überstülpen des Magazins kann auch durch bekannte, mechanisch arbeitende Greifer ausgeführt werden.

In einer besonders vorteilhaften Ausgestaltung des erfindungsgemäßen Magazins, bei der im Magazinboden zwischen den Stegen Bohrungen vorgesehen sind, kann das Entladen des Magazins mit Hilfe von Auswerferstiften ebenfalls auf mechanische Weise erfolgen.

Ferner sind konstruktive Maßnahmen für ein sicheres Stapeln und für beliebiges Verlängern der Magazine getroffen.

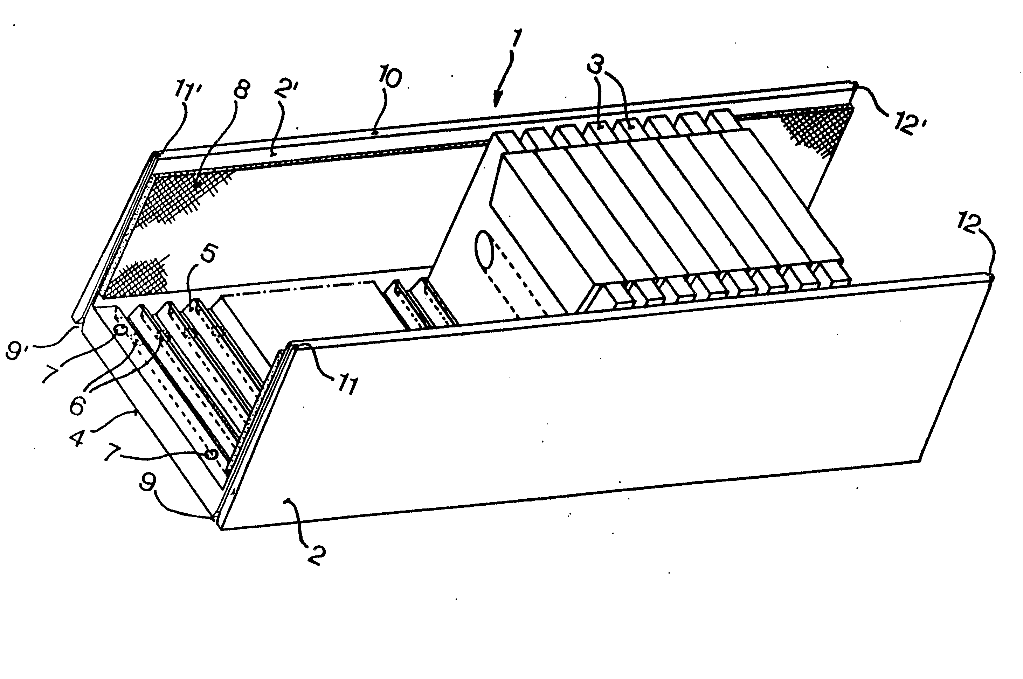

Das erfindungsgemäße Magazin ist nachfolgend anhand eines in der Zeichnung dargestellten Ausführungsbeispiels näher beschrieben.

Die Zeichnung zeigt das Magazin in einer perspektivischen Gesamtansicht.

Das Magazin ist eine im Querschnittprofil U-förmige Wanne 1, die vorzugsweise als Spritzgußteil aus Kunststoff, beispielsweise aus Polyvinylchlorid hergestellt ist. An den Stirnseiten ist die Wanne 1 offen, so daß sich deren beiden Seitenteile 2, 2' beim Einsetzen der Magnetbandkassetten 3 elastisch nach außen drücken lassen. Auf diese Weise sind die Magnetbandkassetten zwischen den Seitenteilen zum Festhalten im Magazin einspannbar. Der Wannenboden 4 ist mit zum Wannenraum hin konisch sich verjüngenden, etwa 3 mm hohen Stegen 5 versehen, zwischen den die Magnetbandkassetten 3 aufgenommen werden. Es ist zweckmäßig, die Breite der Stege so zu bemessen, daß sich die Magnetbandkassetten mit den in Höhe der Funktionsöffnungen seitlich hervortretenden Profilen berühren, um eine kompakte und stabile Packung zu erhalten. Zwischen den Stegen 5 sind jeweils zwei Bohrungen 6 vorgesehen, durch die Auswerferstifte zum Entladen des Magazins treten können. Bohrungen 7 in den Stegen an den Enden der Wanne 1 dienen Zentrierorganen in den Montagestationen.

An der Innenseite sind die beiden Seitenteile 2, 2' über ihre gesamte Länge mit einem Streifen 8 aus nachgiebigem Material versehen. Vorzugsweise wird ein Filzbelag verwendet, der mittels einer selbstklebenden Haftschicht an den Seitenteilen befestigt ist. Die dadurch leicht auswechselbaren Streifen 8 gewährleisten einen festen Sitz der Magnetbandkassetten 3 im Magazin in jeder Lage und verhindern das Reiben und Scheuern der Kassetten an den Seitenteilen während des Transports.

Die Seitenteile 2, 2' überragen für die Stapelbarkeit des Magazins die eingesetzten Kassetten. Zu diesem Zweck ist es vorteilhaft, an der Unterseite der Wanne 1 in Höhe der Seitenteile Nuten 9, 9' vorzusehen, die zur Ausdehnung und Anordnung der entsprechenden Oberkanten 10 der Seitenteile 2, 2' deckungsgleich angeordnet sind.

Für einen erweiterten Einsatz des Magazins kann dieses dadurch verlängert werden, daß zwei oder mehrere Magazine hintereinander angeordnet fest oder lösbar verbunden werden. Für die Verbindung sind an den Stirnkanten der Seitenteile 2, 2' einerseits entlang der Kanten verlaufende Nuten 11, 11' und andererseits mit diesen korrespondierende Stege 12, 12' vorgesehen.

## Patentansprüche

1. Magazin für Magnetbandkassetten, bestehend aus einer im Querschnittprofil U-förmigen Wanne (1) mit einer Vielzahl von am Wannenboden (4) quer verlaufenden Stegen (5), die im Abstand der Dicke einer Magnetbandkassette (3) angeordnet sind, dadurch gekennzeichnet, daß die Wanne (1) an den beiden Stirnseiten offen ist und die beiden Seitenteile (2, 2') der Wanne, die die eingesetzten Magnetbandkassetten überragen und elastisch nach außen biegbar sind, an der Innenseite über die gesamte Länge mit jeweils einem Streifen (8) aus nachgiebigem Material versehen sind, wobei die lichte Weite zwischen den derartig belegten Seitenteilen etwa im Maße der Kompressibilität der Streifen kleiner ist als das diesbezügliche Maß der einzusetzenden Magnetbandkassetten.

2. Magazin nach Anspruch 1, dadurch gekennzeichnet, daß die Stege (5) zum Wannenraum hin konisch verjüngt sind.

3. Magazin nach Anspruch 1 bis 2, dadurch gekennzeichnet, daß der Wannenboden (4) zwischen den Stegen (5) jeweils an mindestens einer Stelle durchbohrt ist.

4. Magazin nach Anspruch 1 bis 3, dadurch gekennzeichnet, daß die Wanne (1) an ihrer Unterseite mit zur Ausdehnung und Anordnung der Oberkante (10) der beiden Seitenteile (2, 2') deckungsgleichen Nuten (9, 9') versehen sind.

5. Magazin nach Anspruch 1 bis 4, dadurch gekennzeichnet, daß die Seitenteile (2, 2') an ihren Stirnkanten einerseits jeweils eine entlang der Kante verlaufende Nut (11, 11') oder andererseits jeweils einen dazu korrespondierenden Steg (12, 12') aufweisen.

## Claims

1. A magazine for magnetic tape cassettes, comprising a trough (1) which is U-shaped in cross section and possesses a plurality of transverse ribs (5) on the bottom (4), the ribs being arranged at intervals corresponding to the thickness of a magnetic tape cassette (3), characterized in that the through (1) is open at both ends and the two side members (2, 2') of the trough, which project above the inserted magnetic tape cassettes and can be resiliently bent apart, are each provided on their inner surfaces, over their entire length, with a strip of resilient material, the clear width between the side members carrying these strips being smaller, by an amount about equal to the thickness of the strips in the compressed state, than the relevant dimension of the magnetic tape cassettes which are to be inserted.

2. A magazine as claimed in claim 1, characterized in that the ribs (5) taper conically toward the large open side of the trough.

3. A magazine as claimed in claims 1 and 2, characterized in that the through bottom (4) possesses at least one hole between adjacent ribs (5).

4. A magazine as claimed in claims 1 to 3, characterized in that the trough (1) is provided, on its underside, with grooves (9, 9') which register with the upper edges (10) of the two side members (2, 2').

5. A magazine as claimed in claims 1 to 4, characterized in that the side members (2, 2') at one end each possess a groove (11, 11') extending over the height of the side member, and the side members at the other end each possess a tongue (12, 12') which registers with this groove.

## Revendications

1. Magasin pour cassettes de bande magnétique, constitué par un baquet (1) de section à profil en U, muni d'une pluralité de barrettes (5) s'étendant transversalement au fond (4) du baquet et qui sont disposées à des distances correspondant à l'épaisseur d'une cassette (3), caractérisé par le fait que le baquet (1) est ouvert sur ses deux faces de bout, et les deux parois latérales (2, 2') du baquet, qui font saillie par rapport aux cassettes placées dans le baquet et sont flexibles élastiquement vers l'extérieur, sont munies, sur leur face intérieure, sur toute leur longueur, d'une bande (8) en matériau souple, la largeur intérieure comprise entre les deux parois latérales ainsi équipées étant ainsi, dans la mesure de la compressibilité de la bande plus faible que la longueur correspondante des cassettes de bande magnétique à introduire.

2. Magasin selon la revendication 1, caractérisé par le fait que les barrettes (5) sont de section amincie coniquement en direction de l'intérieur du baquet.

3. Magasin selon l'une des revendications 1 ou 2, caractérisé par le fait que le fond (4) du baquet est percé, entre les barrettes (5), en au moins un point.

4. Magasin selon l'une des revendications 1 à 3, caractérisé par le fait que le baquet (1) est muni, sur sa face inférieure, de rainures (9, 9') permettant un recouvrement, pour l'extension et la disposition des bords supérieurs (10) des deux parois latérales (2, 2').

5. Magasin selon l'une des revendications 1 à 4, caractérisé par le fait que les parois latérales (2, 2') comportent chacune, sur leurs arêtes d'extrémité, d'une part, une rainure (11, 11') s'étendant le long de l'arête et, d'autre part, une réglette (12, 12') correspondant à une telle rainure.